# EUROPEAN PATENT SPECIFICATION

(11) **EP 2 317 735 B1**
(45) Date of publication and mention of the grant of the patent: **31.12.2014**
(21) Application number: 10187634.0
(22) Date of filing: 14.10.2010
(51) Int. Cl.: H04M 1/02, G06F 3/02, H04M 1/23, H04M 1/725

(54) **Mobile terminal**
Mobiles Endgerät
Terminal mobile

(30) Priority: 28.10.2009 KR 20090103052
(43) Date of publication of application: 04.05.2011
(73) Proprietor: LG ELECTRONICS INC., Yeongdeungpo-gu Seoul 150-721 (KR)
(72) Inventor: Hwang, Yongjin, Seoul (KR); Park, Seongjoon, Seoul (KR); Miles, Luke, Londres, WC2E 7HA (GB)
(74) Representative: Cabinet Plasseraud

(56) References cited:
- EP-A2- 2 007 116
- WO-A2-2008/147464
- US-A- 5 327 162
- US-A1- 2009 027 842

## Description

### FIELD OF THE INVENTION

The present invention relates to the field of mobile terminals.

### BACKGROUND OF THE INVENTION

Mobile terminals perform functions including capturing still and moving images, playing music and video files and games, and receiving broadcast signals. In spite of the integrated nature of these terminals, improvements are still needed.

EP2007116 discloses a mobile terminal that is configured to allow relative sliding motion of two parts of the terminal for use as a control input. The sliding is achieved using a two sliding members to permit sliding in two perpendicular directions.

US2009/027842 discloses a mobile terminal configured to allow relative sliding motion by using a flexible resilient pad.

### SUMMARY OF THE INVENTION

An object of the present invention is to substantially obviate one or more problems due to limitations and disadvantages of the related art.

To achieve this objects and other advantages and in accordance with the purpose of the invention, as embodied and broadly described herein, a mobile terminal comprises the features of claim 1.

Further embodiments of the mobile terminal are described in the dependent claims.

### BRIEF DESCRIPTION OF THE DRAWINGS

FIG. 1 is a diagram showing one embodiment of a mobile terminal.
FIG. 2a is a diagram showing an example of a front view and Fig. 2b shows an example of a rear view of the mobile terminal.
FIG. 3 is a diagram showing an exploded view of the mobile terminal.
FIG. 4 is a diagram showing a cross-sectional view of the mobile terminal along line IV-IV in FIG. 3.
FIG. 5 is a diagram showing a cross-sectional view of the mobile terminal along line V-V in FIG. 3.
FIGS. 6a and 6b are diagrams showing sensing units that may be used for different embodiments of the mobile terminal.
FIGS. 7 through 14 are diagrams showing different states of operation of the mobile terminal according to a respective number of embodiments.
FIG. 15 is a diagram showing another embodiment of a connection module of a mobile terminal mentioned in connection with FIG. 3.
FIGS. 16 and 17 show the connection module of FIG. 15.
FIGS. 18 and 19 are diagrams showing different operating states of a mobile terminal according to a respective number of embodiments.

### DETAILED DESCRIPTION OF THE INVENTION

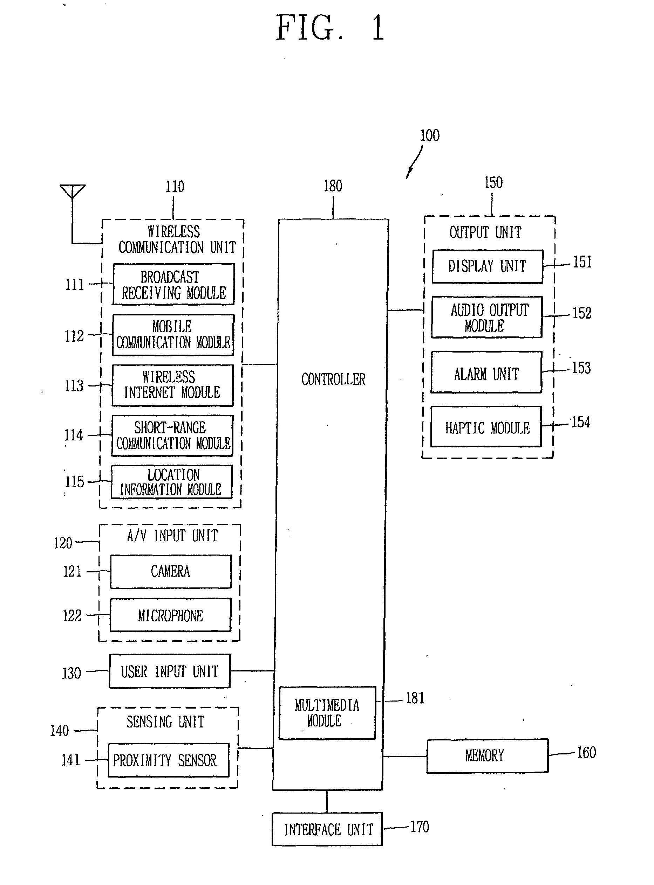

FIG. 1 shows one embodiment of a mobile terminal which includes a wireless communication unit 110, an AudioNideo (A/V) input unit 120, a user input unit 130, a sensing unit 140, an output unit 150, a memory 160, an interface unit 170, a controller 180, and a power supply unit 190. The mobile terminal may be or include a portable phone, smart phone, laptop computer, digital broadcast terminal, personal digital assistant (PDA), portable multimedia player (PMP), navigation device or any one of a number of other portable or transportable devices equipped with a communication capability and/or multimedia capability.

The wireless communication unit 110 may include one or more elements allowing radio communications to take place between the mobile terminal 100 and a wireless communication system, and/or between the mobile terminal 100 and a network in which the mobile terminal 100 is located. For example, the wireless communication unit 110 may include a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server through a broadcast channel. The channel may be a satellite channel and/or a terrestrial channel.

The broadcast management server may generate and transmit broadcast signals or broadcasts associated information, and/or may receive previously generated broadcast signals and/or broadcasts associated information transmitted to the mobile terminal 100. The broadcast signal may be, for example, a TV broadcast signal, a radio broadcast signal or a data broadcast signal, as well as a broadcast signal that includes a data broadcast signal coupled to a TV or radio broadcast signal.

Broadcast associated information may include information regarding a broadcast channel, a broadcast program, or a broadcast service provider. Also, the broadcast associated information may be provided through a mobile communication network, and in this case the broadcast associated information may be received by the mobile communication module 112.

The broadcast associated information may exist in various forms. For example, it may exist in the form of an electronic program guide (EPG) of digital multimedia broadcasting (DMB), or electronic service guide (ESG) of digital video broadcast-handheld (DVB-H).

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like. The broadcast receiving module 111 is, of course, configured to be suitable for every broadcast system that provides a broadcast signal as well as the above-mentioned digital broadcast systems.

The broadcast signal and/or broadcast-associated information received through the broadcast receiving module 111 may be stored in the memory 160.

The mobile communication module 112 transmits and/or receives a radio signal to and/or from at least one of a base station, an external terminal or a server over a mobile communication network. The radio signal may include a voice call signal, video call signal, and/or various types of data according to text and/or multimedia message transmission and/or reception.

The wireless Internet module 113 may support wireless Internet access and may be built-in or externally installed to the mobile terminal 100. The wireless Internet access technique may be made available through for example, a WLAN (Wireless LAN), Wi-Fi, Wibro (Wireless Broadband), Wimax (World Interoperability for Microwave Access), and/or HSDPA (High Speed Downlink Packet Access).

The short-range communication module 114 supports short-range communications using, for example, Bluetooth, Radio Frequency IDentification (RFID), Infrared Data Association (IrDA), Ultra WideBand (UWB), and/or ZigBee technologies.

The location information module 115 checks or acquires information indicating a location of the mobile terminal. A GPS module is a representative example.

The A/V(audio/video) input unit 120 receives an audio or video signal using, for example, a camera 121 and microphone 122. The camera 121 processes image frames such as still pictures or videos obtained by an image sensor in a video phone call or image capturing mode, and the processed frame may be displayed on display unit 151.

The image frames processed by the camera 121 may be stored in the memory 160 or transmitted to an external device through the wireless communication unit 110. In another embodiment, the terminal may have two or more cameras 121.

The microphone 122 receives an external audio signal in phone call mode, recording mode, and voice recognition mode, and the audio signal is processed into electrical voice data. The processed voice data may be converted and output in a format that is transmittable to a mobile communication base station through the mobile communication module 112 in phone call mode. The microphone 122 may implement various types of noise canceling algorithms to cancel noise generated in a procedure of receiving the external audio signal.

The user input unit 130 may generate input data, to control operation of the terminal, using a keypad, dome switch, touch pad (pressure/capacitance), jog wheel, jog switch, or other types of input units.

The sensing unit 140 detects a current status of the mobile terminal 100 such as an opened or closed state of the mobile terminal 100, a location of the mobile terminal 100, and an orientation of the mobile terminal 100, and generates a sensing signal for controlling operation of the mobile terminal 100. For example, when the mobile terminal 100 is a slide-type phone, the sensing unit may sense an open or closed state of the phone.

Moreover, the sensing unit 140 may detect whether or not power is supplied from the power supply unit 190, or whether or not an external device is coupled to the interface unit 170. On the other hand, the sensing unit 140 may include a proximity sensor 141.

The output unit 150 is configured to output one or more of audio signals, video signals, or alarm signals and may include the display unit 151, audio output module 152, alarm unit 153, and/or a haptic module 154 for these purposes.

The display unit 151 may display (output) information processed in the mobile terminal 100. For example, when the mobile terminal 100 is in phone call mode, the display unit 151 may display a User Interface (Ul) or Graphic User Interface (GUI) associated with a call. When the mobile terminal 100 is in video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, or a three-dimensional (3D) display.

Further, the display may be a transparent- or optical transparent-type display to allow a viewer to see through the display unit. These types of display may be referred to as transparent displays. A more specific example of a transparent display is a transparent LCD (TOLED). Using a transparent display 151, a user see through the terminal body to view an object positioned at a rear side of the terminal.

in one embodiment, the terminal may include two or more display units 151. For instance, a plurality of display units 151 may be arranged on one surface of the terminal and spaced apart from or integrated with each other, or may be arranged on different surfaces of the terminal.

If the display unit 151 and a touch sensitive sensor (referred to as a touch sensor) have an interlayer structure, the structure may be referred to as a touch screen. The display unit 151 may be used as an input device as well as an output device. The touch sensor may be implemented, for example, as or using a touch film, a touch sheet, or a touch pad.

The touch sensor may be configured to convert changes of pressure applied to a specific part of the display unit 151, or changes in capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller. The touch controller processes the received signals and then transmits corresponding data to the controller 180. Accordingly, the controller 180 may sense which region of the display unit 151 has been touched.

A proximity sensor 141 may be arranged at an inner region of the portable terminal 100 covered by the touch screen, or near the touch screen. The proximity sensor may sense the presence or absence of an object approaching a surface to be sensed or an object near a surface to be sensed, based on an electromagnetic field or infrared rays and without mechanical contact. The proximity sensor tends to have a longer lifespan and more enhanced utility than a contact sensor.

The proximity sensor may be or include, for example, an optical transmission-type photoelectric sensor, a direct reflective-type photoelectric sensor, a mirror reflective-type photoelectric sensor, a high-frequency oscillation proximity sensor, a capacitance-type proximity sensor, a magnetic-type proximity sensor, or an infrared rays proximity sensor. When the touch screen is implemented as a capacitance-type, proximity of a pointer to the touch screen is sensed by changes of an electromagnetic field. In this case, the touch screen (touch sensor) may be categorized into a proximity sensor.

In accordance with one embodiment, the case where the pointer is positioned proximate to the touch screen without contact may be understood to be a proximity touch, and the case where the pointer substantially comes in contact with the touch screen may be understood to be a contact touch. In performing a proximity touch, the pointer may be oriented at a predetermined angle (e.g., substantially perpendicular) relative to the touch screen.

Also, the proximity sensor may detect not only proximity touches but also proximity touch patterns (e.g., distance, direction, speed, time, position, moving status of the point). Information relating to the sensed proximity touch and the sensed proximity touch patterns may be output onto the touch screen.

The audio output module 152 may output audio data, received from the wireless communication unit 110 or stored in the memory 160, in call-receiving mode, call-placing mode, recording mode, voice recognition mode, and/or broadcast reception mode. The audio output module 152 may output audio signals relating to functions performed in the portable terminal 100, e.g., sound alarm for a received call or message. The audio output module 152 may include, for example, a receiver, a speaker, and/or a buzzer for this purpose.

The alarm unit 153 outputs signals notifying occurrence of events in the portable terminal 100. These events may include, for example, a received call, a received message, a key signal input, and/or a touch input. The alarm unit 153 may output not only video or audio signals, but also other types of signals such as signals notifying occurrence of events in a vibration manner. Because video or audio signals can be output through the display unit 151 or the audio output unit 152, the display unit 151 and the audio output module 152 may be considered a part of the alarm unit 153.

The haptic module 154 generates various tactile effects which a user can feel. A representative example of a tactile effect generated by the haptic module 154 includes vibration. Vibration generated by the haptic module 154 may have a controllable intensity and/or controllable pattern. For instance, different vibrations may be output in a synthesized manner or a sequential manner.

The haptic module 154 may generate various tactile effects including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, and/or reproduction of cold or hot feeling using a heat absorbing device or a heat emitting device.

The haptic module 154 may be configured to transmit tactile effects (signals) through a user's direct contact or a user's muscular sense using a finger or a hand. In one embodiment, the terminal may include two or more haptic modules 154.

The memory 160 may store programs for the processing and control functions of controller 180. Alternatively, the memory 160 may temporarily store input/output data, including but not limited to phonebook data, messages, still images, and video as well as other types of data. Also, the memory 160 may store data relating to various vibration patterns and audio to be output in response to a touch input on the touch screen.

The memory 160 may be implemented using any type of suitable storage medium including but not limited to a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, and/or optical disk. Also, the mobile terminal 100 may operate a web storage which performs the storage function of the memory 160 on the Internet.

The interface unit 170 may generally be implemented to interface the portable terminal with external devices. The interface unit 170 may allow for data reception from an external device, power delivery to each component in the portable terminal 100, and/or data transmission from the portable terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, and/or earphone ports.

The identification module may include a chip for storing information required to authenticate authority to use the portable terminal 100, and in this regard may include a User Identity Module (UIM) and/or a Subscriber Identity Module (SIM). Also, the identification module may be configured to operate based on information from smart card. In this case, the module and smart card (or the smart card alone) may be referred to as an identification device. The smart card or another type of identification device may be coupled to a port of the portable terminal 100.

In addition to the aforementioned features, the interface unit may serve as a path for power to be supplied from an external cradle to the portable terminal 100, when the portable terminal 100 is connected to an external cradle or as a path for transferring various command signals input from the cradle by a user to the portable terminal 100. Such command signals or power input from the cradle may serve as signals for recognizing that the portable terminal 100 has accurately been mounted to the cradle.

The controller 180 controls the overall operations of the portable terminal 100. For example, the controller 180 may perform control and processing operations associated with telephony calls, data communications, and video calls. The controller 180 may include a multimedia module 181 which provides multimedia playback. The multimedia module 181 may be configured as part of the controller 180 or as a separate component. The controller 180 may also perform a pattern recognition processing to recognize writing or drawing input on the touch screen as text or image.

The power supply unit 190 provides power required by various components under the control of controller 180. The provided power may be internal power, external power, or a combination thereof.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For a software implementation, the operations and functions of the terminal may be implemented with or using separate software modules, each of which performs at least one terminal function or operation. The software code can be implemented with a software application written in any suitable programming language. Also, the software code may be stored in the memory 160 and executed by controller 180.

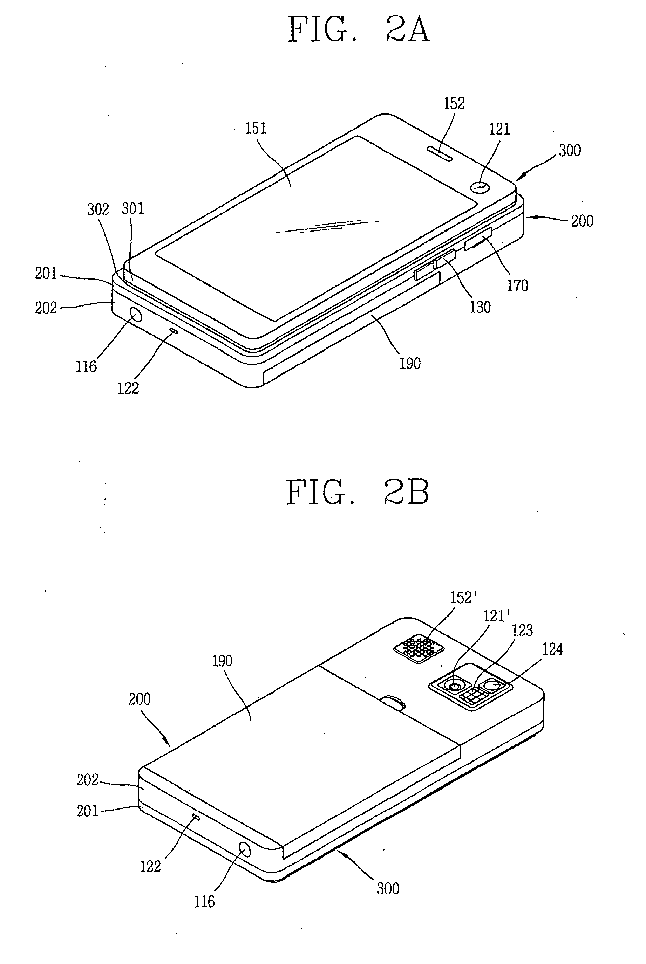

FIG. 2A shows one embodiment of a mobile terminal or portable terminal, which includes a first body 200 and a second body 300 configured to be relatively slidably moved in a plurality of directions with respect to the first body 200. The second body 300 is mounted on a front surface of the first body 200 and is slidably movable in a vertical or horizontal direction relative to the first body 200.

A case (housing, casing, cover, etc.) forming the outside of the first body 200 and the second body 300 may be formed by a front case 201, 301 and a rear case 202, 302 respectively. In addition, various electronic components may be built in spaces formed between the front case 201, 301 and the rear case 202, 302.

At least one intermediate case may be additionally disposed between the front case 201, 301 and the rear case 202, 302. Further, the cases may be formed of a synthetic resin in a manner of injection molding, or formed to have metallic materials such as stainless steel (STS) and titanium (Ti).

A display 151, an audio output unit 152, and a camera 121 may be disposed on the second body 300.

The display unit 151 may occupy most of a main surface of the front case 301, and the sound output unit 152 and camera 121 may be disposed in an region adjacent to one of both end portions of the display unit 151.

A user input unit 131, a microphone 122, and an interface 170 may be disposed on the first body 200. The user input unit 132, the interface 170, and the like may be disposed at lateral surfaces of the front case 201 and the rear case 202.

The user input unit 130 is manipulated to receive an instruction for controlling the operation of the mobile terminal 100 and may include at least one manipulation unit. The manipulation unit may allow a user to perform manipulation operation with a tactile feeling.

Contents received by the manipulation unit 130 may be configured in various ways. For example, the manipulation unit 130 may receive an instruction such as start, end, and scroll, or receive an instruction such as controlling volume of the sound outputted from the sound output unit 152, and switching to a touch recognition mode of the display unit 151.

FIG. 2B shows that a rear side of the terminal in FIG. 2A may include a camera 121' mounted on a rear surface (e.g., a rear case 202) of the first body 200. The camera 121' may have a capturing direction substantially opposite to that of camera 121 (see FIG. 2A) and may have a different pixel resolution from camera 121.

For example, it is preferable that camera 121 has a lower pixel resolution to allow a user to capture his face and send it to another party in case of video call. Camera 121' may have a higher pixel resolution to allow for capture of an image of a scene or object for storage or immediately sending. The cameras 121 and 121' may be provided in the terminal body 200, 300 in a rotatable or pop-up manner.

A flash 123 and a mirror 124 may be additionally disposed adjacent to the camera 121'. The flash 123 emits light toward an object when capturing the object with the camera 121'. The mirror 124 allows the user to see his own face when the user wants to capture himself or herself in a self-portrait mode using the camera 121'.

An audio output unit 152' may be additionally disposed at a rear surface of the first body 200. The audio output unit 152' may implement a stereo function together with the audio output unit 152 (FIG. 2A), and may be used to implement a speakerphone mode during voice communication.

An antenna 124 for receiving broadcasting signals, in addition to a communication antenna, may be disposed at a lateral surface of the first body 200. An antenna 116 constituting part of the broadcasting reception module 111 (see FIG. 1) may be provided in a retractable manner on the terminal body 110.

The power supply unit 190 for supplying power to the portable terminal 100 may be mounted on the first body 200. The power supply unit 190 may be provided such that it is incorporated in the first body 200 or directly drawn out of the first body 200 in a detachable manner.

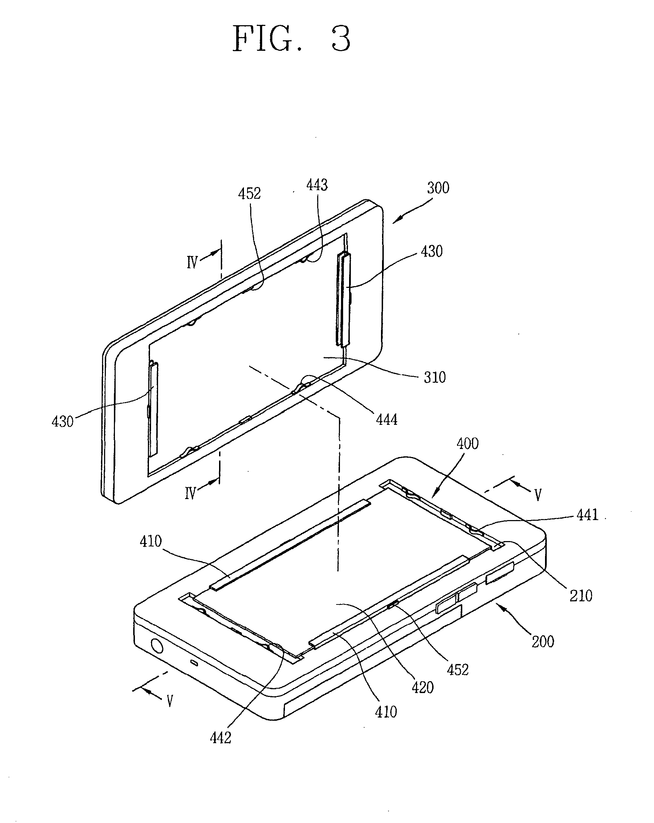

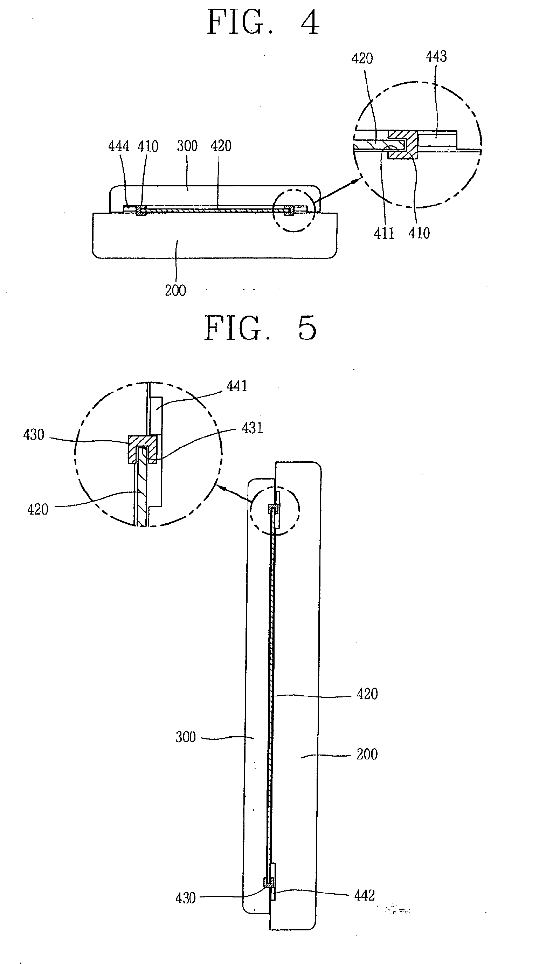

FIG. 3 shows another view of the mobile terminal in FIGS. 1 and 2A and 2B, FIG. 4 shows a cross-sectional view taken along line IV-IV in FIG. 3, and FIG. 5 shows a cross-sectional view taken along line V-V in FIG. 3.

A connection module 400 for connecting the first and the second body 200, 300 is provided between the first body and the second body. The connection module 400 is provided to connect the first body 200 with the second body 300 such that the second body 300 can be slidably moved in a plurality of directions with respect to the first body 200.

According to this embodiment, the connection module 400 may include a first slide rail 410, an intermediate plate 420, and a second slide rail 430.

The first slide rail 410 is fixed to a front surface of the first body 200 and has a groove 411 to allow intermediate plate 420 to slidably move therethrough. A recess portion 210 recessed to a predetermined depth may be formed on a front surface of the first body 200, and the first slide rail 410 may be fixed on the recess portion 210. A pair of first slide rails 410 may be formed thereon and disposed at positions separated by a predetermined distance in a horizontal direction of the first body 200, respectively.

The intermediate plate 420 is slidably combined with groove 411 of the first slide rail 410. Both the left and right end portions of the intermediate plate 420 are combined with a pair of the first slide rails 410, and the intermediate plate 420 slidably moves in a first direction with respect to the first slide rail 410. The first direction may be a vertical direction of the first body 200.

The second slide rail 430 is fixed to a rear surface of the second body 300 and has a groove 431 similar to the first slide rail. A recess portion 310 may be also formed on a rear surface of the second body 300, and the second slide rail 430 may be fixed on the recess portion 3210. A pair of the second slide rails 430 may be formed thereon and may be disposed at positions separated by a predetermined distance in a vertical direction of the second body 300, respectively.

Both the top and bottom end portions of the intermediate plate 420 are slidably combined with a pair of the second slide rails 430. Accordingly, the second body 300 fixed with the second slide rail 430 can slidably move in a second direction with respect to the intermediate plate 420. Here, the second direction may be a horizontal direction of the first body 200.

According to the foregoing construction, the intermediate plate 420 can be moved back-and-forth along the first direction with respect to the first body 200, and the second body 300 can be moved back-and-forth in a second direction perpendicular to the first direction with respect to the intermediate plate 420.

In addition, the second body 300 may slidably move in various manners with respect to the first body 200. For example, the second body 300 may move in a vertical direction, horizontal direction, and/or diagonal direction (e.g., by sliding the first body with the intermediate plate and then sliding the second body relative to this plate) and may also rotate, tilt, and move back-and-forth with respect to the first body 200.

In this embodiment, the second body 300 is shown to be slightly larger than the first body 200. However, in other embodiments, the second body 300 may have the same size as the first body 200.

A plurality of springs 441 through 444 for restoring the second body 300 to an initial position when the second body 300 is moved may be disposed on the first body 200 or the second body 300. The second body 300 is moved a slight distance with respect to the first body 200, and then restored to an initial position by elastic force provided by the springs 441 through 444.

First and second springs 441, 442 may be disposed on the recess portion 210 of the first body 200. The first and second springs 441, 442 provide restoring forces to the second body 300 when the second body 300 is moved back-and-forth in the first direction (vertical direction). In the case where the first spring 441 is disposed at one end portion of the recess portion 210, the second spring 442 may be disposed at the other end portion of the recess portion 210.

In other embodiments, a plurality of first and the second spring 441, 442 may be disposed on a side wall of the recess portion 210. The first and second spring 441, 442 support a pair of the second slide rails 430, respectively, and serve to restore the second body 300 to an initial position when the second body 300 is moved in the first direction (vertical direction).

According to one embodiment, the first and second springs 441, 442 may support a lateral surface of the pair of the second slide rails 430. In other embodiments, the first and second springs 441, 442 support a vertical lateral surface of the intermediate plate 420.

Third and fourth springs 443, 443 may be disposed on the recess portion 310 of the second body 300. The third and fourth springs 443, 444 may provide restoring forces to the second body 300 when the second body 300 is moved back-and-forth in the second direction (horizontal direction).

The third and fourth springs 443, 444 may be disposed at both end portions of the recess portion 310. In other embodiments, a plurality of third and fourth springs may be on a side wall of the recess portion 310. The third and fourth springs 443, 444 may support a pair of the first slide rails 410, respectively, and may serve to restore the second body 300 to an initial position when the second body 300 is moved in the second direction (horizontal direction).
According to one embodiment, a pair of the third and fourth springs 443, 444 may support a lateral surface of the pair of the first slide rails 410. In other embodiments, the third and fourth springs 443, 444 may support a horizontal lateral surface of the intermediate plate 420.

The mobile terminal may further include a sensing unit for sensing movement of the second body 300 relative to the first body 200.

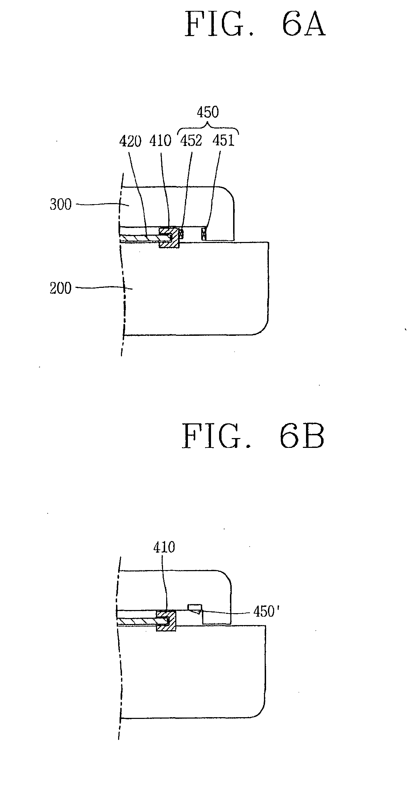

FIG. 6A shows an example of a sensing unit for sensing movement of the second body relative to the first body, and FIG. 6B shows another type of sensing unit for performing a similar function.

Referring to FIG. 6A, a sensing unit 450 may include a first conductive plate 451 disposed at the second body 300, a second conductive plate 452 disposed at the connection module 400 to face the first conductive plate 451, and a sensor (not shown) for detecting a distance between the first and the second conductive plate 451, 452.

The first conductive plate 451 may be positioned on the recess portion 310 of the second body 300, and the second conductive plate 452 may be positioned at a lateral surface of the first slide rail 410 to face the first conductive plate 451. If a current is applied to the first and the second conductive plate 451, 452, a resistance value between them will vary based on a distance between the first and the second conductive plate 451, 452. The variance in this resistance value may be detected by the sensor to determine relative movement between the first and second bodies.

The sensor detects a distance between the first and second conductive plates 451, 452 as well as whether or not the second body 300 is moved, and thus it is possible to detect movement of the second body 300 in stages. According to FIG. 6A, a sensing unit 450 may detect the second direction (horizontal direction) movement of the second body 300.

In addition, the first conductive plate 451 and the second conductive plate 452 may be disposed on the first body 200 and the connection module 400, respectively. In other words, the first conductive plate 451 may be positioned on the recess portion 210 of the first body 200, and the second conductive plate 452 may be positioned at a lateral surface of the second slide rail 430 to face the first conductive plate 451. In this case, the sensing unit 450 may detect the first direction (vertical direction) movement of the second body 300.

According to this embodiment, the first conductive plates 451 may be located at two positions (both end portions of the recess portion 210), and located at two positions (both end portions of the recess portion 310). Moreover, the second conductive plates 452 may be located at each lateral surface of the pair of the first slide rails 410, and located at each lateral surface of the pair of the second slide rails 430.

Referring to FIG. 6B, the sensing unit may be implemented in the form of a switch 450' on the second body 300. The switch 450' may be mounted on the recess portion 310 of the second body 300, and may be configured to be brought into contact with the first slide rail 410 to perform a pressing operation by the movement of the second body 300. The switch 450' may be pressed by the first slide rail 410 to generate a signal and thus the second direction (horizontal direction) movement of the second body 300 may be detected.

The switch 450' may be mounted on the first body 200, and in this case may be configured to be brought into contact with the second slide rail 430 to perform a pressing operation. In this case, the switch 450' detects the first direction (vertical direction) movement of the second body 300.

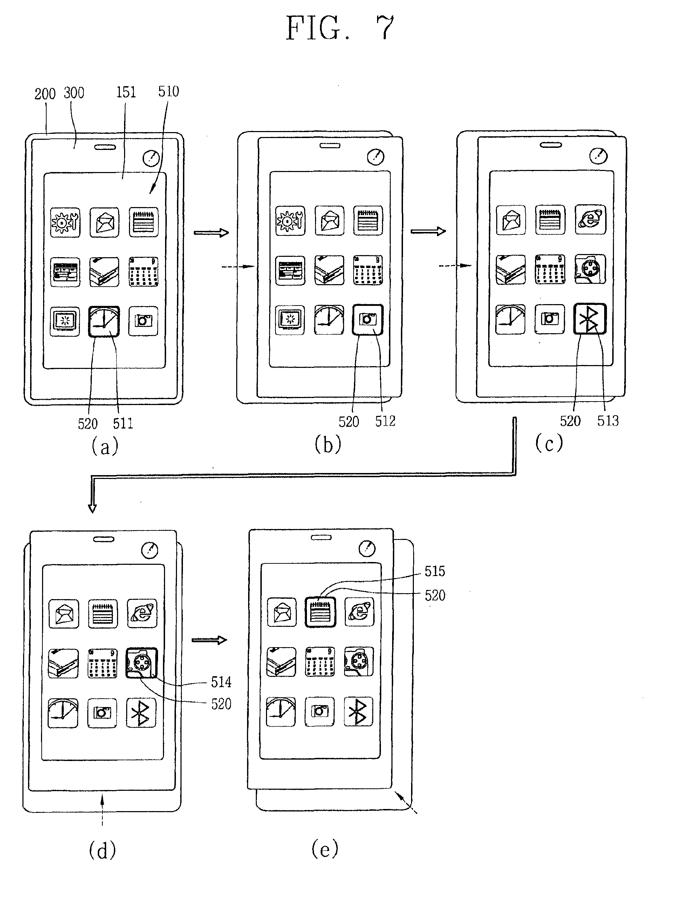

FIG. 7 shows one embodiment of an operating state of the mobile terminal. According to this embodiment, an object that can be moved in a plurality of directions is displayed on the display unit 151, and the controller 180 may be configured to move the object displayed on the display unit 151 in a direction corresponding to the moving direction of the second body 300. Various visual information may be displayed on the display unit 151 in shapes such as characters, numbers, symbols, graphics, icons, or the like.

In order to input information, at least one of the characters, numbers, symbols, graphics, or icons may be displayed in a predetermined arrangement to implement the form of a keypad. Such a keypad may include so-called "soft keys," and a user can input information by touching one of the soft keys.

Accordingly, FIG. 7 shows a plurality of icons 510 displayed on the display unit 151. The icons 510 visually represent functions supported by the mobile terminal, and a function corresponding to one of the icons 510 may be carried out when the icon is selected or a specific command is received subsequent to the selection.

The display screen may also show a movable object in the form of a pointer 520 (or cursor) positioned at any one of the icons 510. The pointer 520 may perform the function of displaying a currently selected icon 510, and the user may touch the relevant icon 510 or manipulate a manipulation unit 310 to implement the function displayed by the relevant icon 510. As the second body 300 is moved in a specific direction with respect to the first body 200, the pointer 520 is moved in a direction corresponding to the direction.

FIG. 7a shows pointer 520 displayed on icon 511. The pointer 520 automatically moves to icon 512 positioned at the right side of the screen when the second body 300 moves to the right side as shown in FIG. 7b. The second body 300 is restored to its initial position by elastic force provided by the third spring 443 (see FIG. 3). In this manner, the second body 300 is restored to an initial position by elastic force provided by the springs 441 through 444 at the time of the movement.

As shown in FIG. 7c, icons 513 that have not been displayed on the display unit 151 may be additionally displayed on the display unit 151 when the second body 300 is further moved to the right side. In this case, the pointer 520 is also moved to an icon 513 positioned at the right side thereof.

Similarly, if the second body 300 is moved to the upper side, then the pointer 520 will be moved to an icon 514 positioned at the upper side thereof (FIG. 7d). Moreover, if the second body 300 is moved in a diagonal direction (for example, in the direction of 11 o'clock), then the pointer 520 will be moved to an icon 514 positioned at the diagonal direction thereof (FIG. 7e).

As described above, the concept in which an object displayed on the display unit 151 is moved in a direction corresponding to the moving direction of the second body 300 may be modified and carried out in various forms. Hereinafter, several examples of the concept will be illustrated.

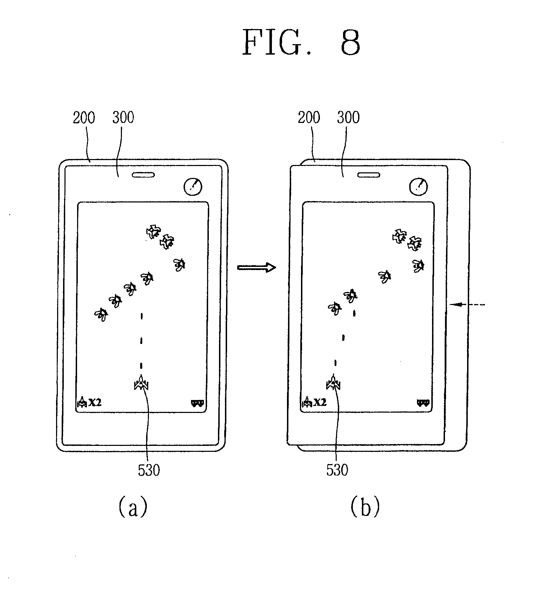

FIG. 8 shows an operating state of a mobile terminal according to another embodiment, in which an object displayed on the display unit 151 may be implemented with a graphic that moves in a plurality of directions when a specific mode is implemented.

FIG. 8a shows a view in which a game mode is carried out and a character 530 is displayed in a movable form on the display unit 151. The character 530 moves in a direction corresponding to the moving direction of the second body 300. For example, as shown in FIG. 8b, when the second body 300 is moved in the left direction, the character 530 moves left on the display screen of the display unit 151. Such a concept may be similarly applicable to various other operation modes such as a text message mode, music listening mode, or video viewing mode.

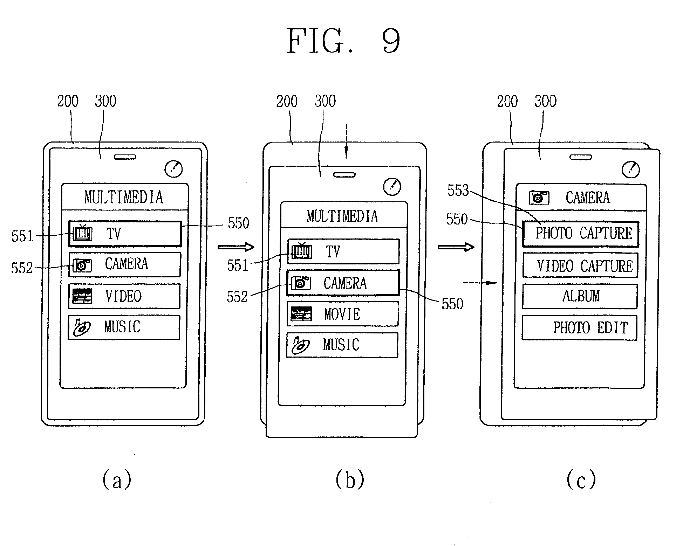

FIG. 9 shows an operating state of a mobile terminal according to another embodiment, in which a menu having a plurality of items 551, 552 displayed on the display unit 151. A pointer 550 (or cursor) is initially displayed on an arbitrary item 551 of the menu as a movable object.

The controller 180 may be configured such that, when the second body 300 moves in the first direction (for example, vertical direction), the pointer 550 moves in a corresponding direction. As the second body 300 moves in the second direction (for example, horizontal direction), an upper or lower item relative to the item positioned with the pointer 550 is displayed.

For example, as shown in FIG. 9b, as the second body 300 moves in a lower direction, pointer 550 moves from item 551 (TV) to item 552 (Camera) positioned thereunder. As shown in FIG. 9c, as the second body 300 moves in the right direction, a submenu corresponding to lower item 552 may be displayed thereon. If the second body 300 moves once more in the right direction, then a function corresponding to the relevant item 553 may be carried out, and an upper item may be displayed again when the second body 300 is moved in the left direction. The concept shown in FIG. 9 may be also applicable to icons showing other functions of a mobile terminal in addition to the items of a menu.

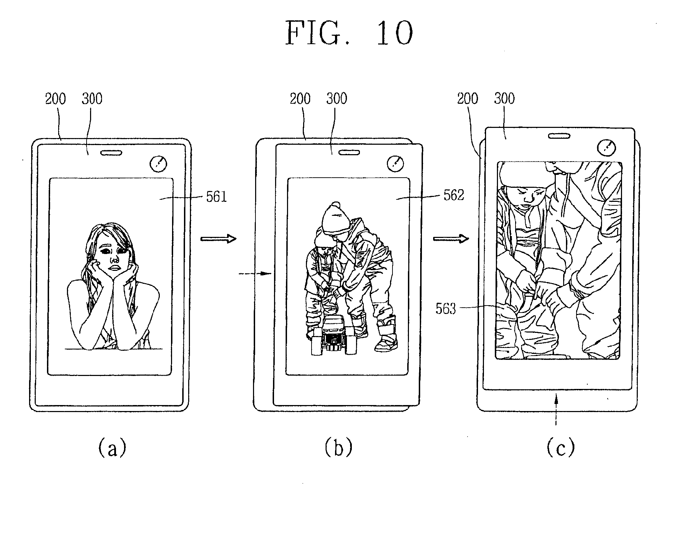

FIG. 10 shows an operating state of a mobile terminal according to another fourth embodiment, in which the mobile terminal is preset to perform a specific operation as the second body 300 is moved in a specific direction. The controller 180 performs the preset operation as the second body 300 is moved in any one direction. The controller 180 may implement different preset operations based on the moving direction of the second body 300.

According to this embodiment, a subsequent image or previous image of the currently displayed image may be displayed if the second body 300 is moved in a horizontal direction, and a zoom-in or zoom-out operation is carried out if it is moved in a vertical direction.

FIG. 10a shows that any one of the files stored with the pictures taken through a camera 121 is displayed in the form of a photograph. As shown in FIG. 10b, a subsequent image 562 of the currently displayed image 561 is be displayed on the display unit 151 if the 300 is moved in the right direction. In this case, a previous image of the currently displayed image 561 will be displayed if the 300 is moved in the left direction.

As shown in FIG. 10c, if the second body 300 is moved in an upper direction, then a zoom-in operation will be carried out to display an enlarged image 563 of the currently displayed image 562. In this case, if the second body 300 is moved in a lower direction, then a zoom-out operation will be carried out. In this manner, the concept in which different operations are performed based on the moving direction of the second body 300 may be modified and carried out in various forms.

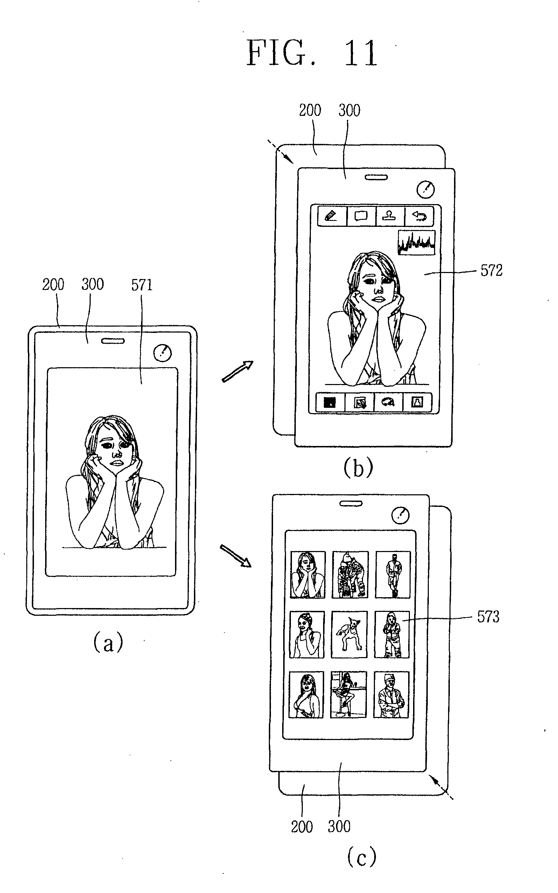

FIG. 11 shows an operating state of a mobile terminal according to another embodiment, in which specific operations are carried out based on movement of the second body 300 in specific directions.

For example, FIG. 11a shows a view in which an image 571 is displayed on the display unit 151. As shown in FIG. 10b, an image editing mode is implemented when the second body 300 is moved in a first diagonal direction (in the direction of 5 o'clock), and thus the display unit 151 will display an image editing screen 572.

As shown in FIG. 10c, an upper item 573 of the currently displayed image 571 may be displayed when the second body 300 is moved in a second diagonal direction (in the direction of 11 o'clock). In addition, different modes or functions may be performed when the second body 300 is moved in corresponding third diagonal (in the direction of 7 o'clock) and a fourth diagonal (in the direction of 1 o'clock) directions.

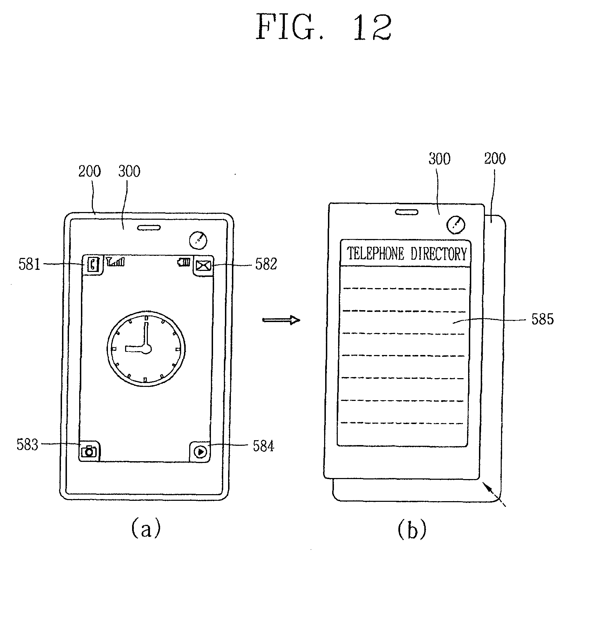

FIG. 12 shows an operating state of a mobile terminal according to another embodiment, in which such images 581 through 584 are displayed at four vertex regions of the display unit 151. In this example, the images correspond to a phonebook mode 581, a text message mode 582, a camera mode 583, and a video viewing or music listening mode 584.

As shown in FIG. 12b, if the second body 300 is moved in a diagonal direction (in the direction of 11 o'clock), a phonebook mode 581 corresponding to that will be carried out. In this embodiment, the user is allowed to see an operation mode corresponding to the moving direction of the second body 300, thereby allowing the user to more easily implement the relevant mode. The operation modes or functions may be set to ones that are frequently used by the user, and/or the user may be allowed to set them directly.

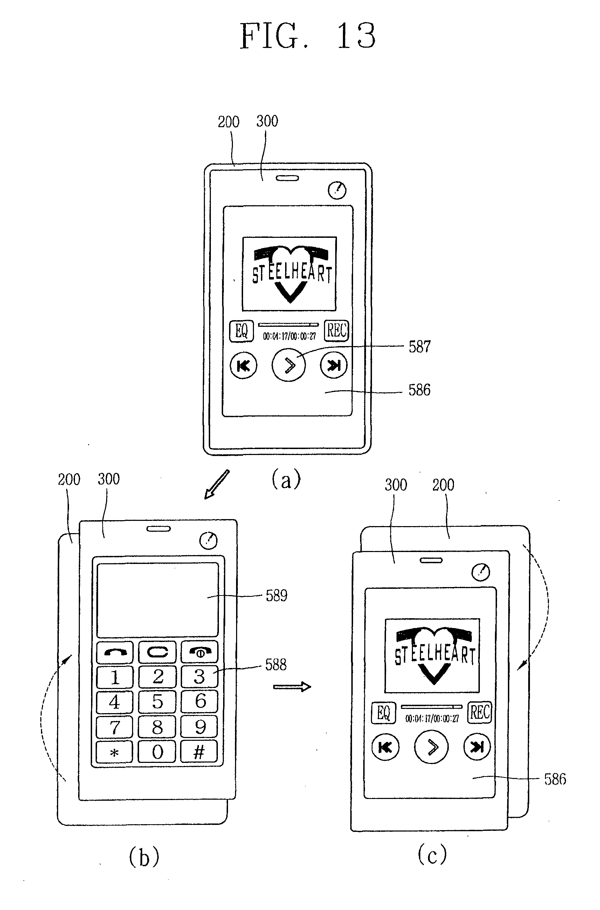

FIG. 13 shows an operating state of a mobile terminal according to another embodiment, in which the second body 300 is rotatably moved with respect to the first body 200. The second body 300 is enabled to move in both the vertical and horizontal directions, and thus it is possible to perform a horizontal-rotation operation with the combination of those operations. The rotating movement is achieved by the second body 300 moving diagonally along a curvilinear trajectory. In one implementation, the terminal may be controlled to perform a specific operation mode or function even at the time of horizontal movement of the second body 300.

FIG. 13a shows a music listening mode where an application 586 for listening to music is displayed on the display unit 151. Soft keys 587 for controlling music reproduction may be displayed for the application.

As shown in FIG. 13b, if the second body 300 is horizontally rotated in a specific direction, then a specific mode, for example, a call transmission mode may be carried out. In the call transmission mode, a soft key 588 for inputting a phone number and an output window 589 for displaying the inputted phone number may be displayed.

As shown in FIG.13c, if the second body 300 is moved in a direction opposite to the direction of FIG. 13b, the terminal may be restored to an initial operation mode, i.e., music listening mode. Accordingly, the application 586 for listening music will be displayed on the display unit 151.

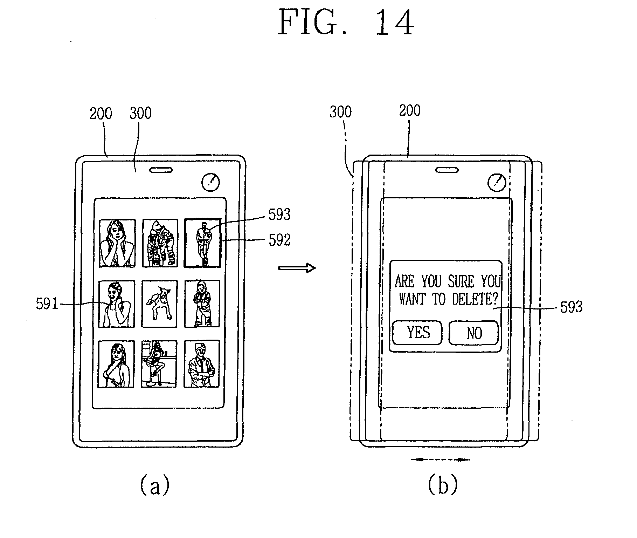

FIG. 14 shows an operating state of a mobile terminal according to another embodiment based on an input in the form of a back-and-forth movement of the second body 300. Such a back-and-forth movement of the second body 300 may involve the second body 300 being moved to the left side and then the right side, or vice versa. Additionally, or alternatively, the second body 300 can be moved back-and-forth in the vertical direction. When the second body 300 is moved back-and-forth, a specific function or mode may be implemented. The "deletion of a specific item" will be used as an example.

FIG. 14a shows a plurality of items 591 displayed in the form of icons on the display unit 151. As an example of those items, pictures stored in the memory 160 are taken, and any one item 593 of the items 591 is displayed with a pointer 592.

As shown in FIG. 14b, if the second body 300 is moved back-and-forth in a horizontal direction, then a delete command is carried out for item 593 positioned at the pointer 592. Accordingly, a graphic 594 in the form of a soft key asking whether the relevant item 593 is to be deleted may be displayed on the display unit 151.

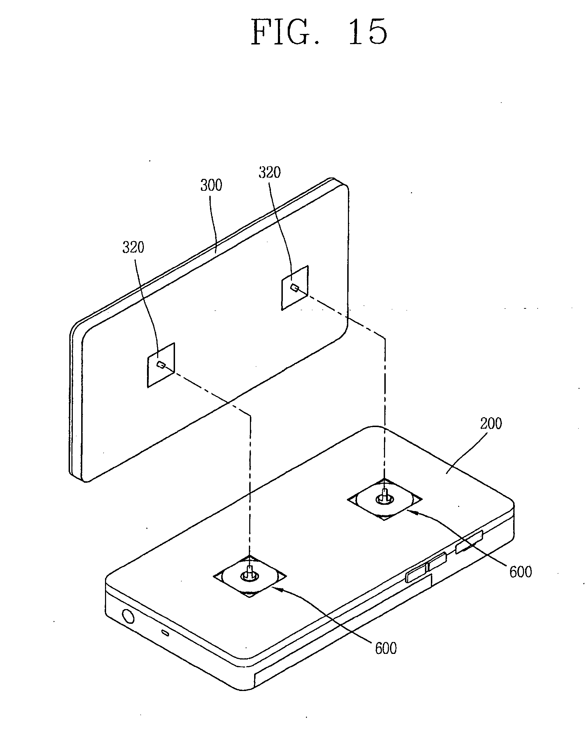

FIG. 15 shows an exploded view of another example of the connection module in FIG. 3, and FIGS. 16 and 17 show a disassembled view and a cross-sectional view of this connection module respectively.

A plurality of connection modules 600 according to this embodiment may be disposed at different (e.g., two) positions of the first body 200. In this case, either one of the connection modules 600 may be called a first connection module, and the other one a second connection module. Also, each module may have a same construction. While two modules are shown in other embodiments only one connection module may be provided.

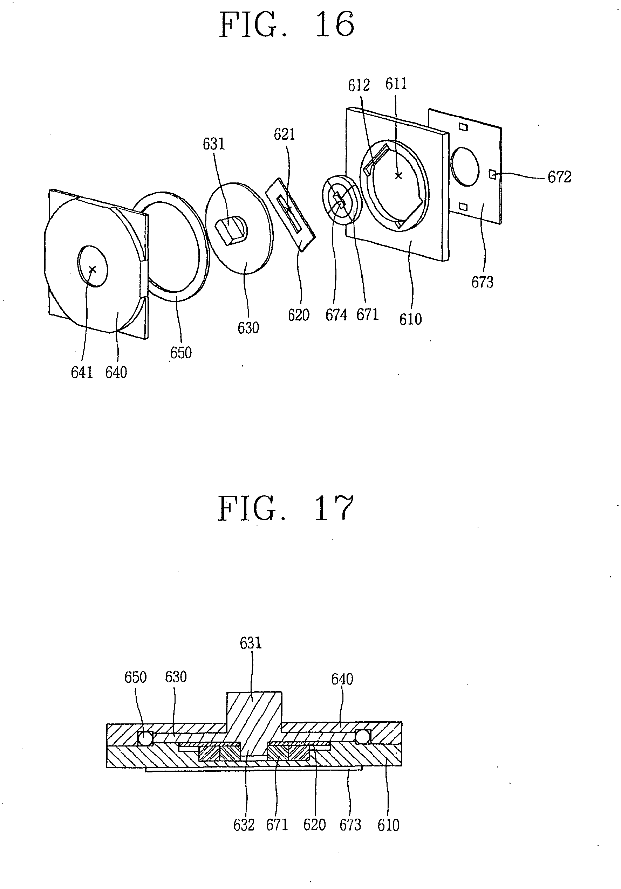

Referring to FIGS. 16 and 17, the connection module 600 may include a base 610, a slide member 620, a moving plate 630, and a cover 640. The base 610 is fixed to a front surface of the first body 200, and may be formed in the shape of a plate. The base 610 is formed with a recess portion 611, and the recess portion 611 is formed with a guide portion 612 for guiding the movement of the slide member 620.

The slide member 620 is slidably mounted on a front surface of the base 610 in the first direction. In other words, the slide member 620 is inserted in the guide portion 612 to be slidably moved in the first direction. The slide member 620 is formed with a through slot 621 along the second direction to guide the movement of the moving plate 630 in the second direction.

The moving plate 630 having a circular plate shape is slidably mounted on the slide member 620 in the second direction. Here, the second direction may have a direction perpendicular to the first direction. A fixation portion 631 to be fixed to a rear surface of the second body 300 is protruded on a front surface of the moving plate 630.

According to this embodiment, a fastening member 320 having an insertion hole is mounted on a rear surface of the second body 300, and the fixation portion 631 may be inserted in the insertion hole to be fastened to the fastening member 320. However, the method of fastening the moving plate 630 with the second body 300 can be modified in various ways if it is a construction for fastening with each other.

An insertion protrusion 632 is formed at a rear surface of the moving plate 630, and it is slidably inserted in the through slot 621 of the slide member 620. Accordingly, the moving plate 630 may be slidably combined with the slide member 620 in the second direction.

A cover 640 is combined with the base 610 to cover the moving plate 630. The cover 640 is formed with a through hole 641 for exposing the fixation portion 631. The through hole 641 is formed larger than the cross section of the through hole 631, thereby allowing the through hole 631 to be moved in various directions. A space allowing the moving plate 630 to be moved in the horizontal direction is formed on a rear surface of the cover 640, and this space is formed larger than the size of the moving plate 630.

According to the foregoing construction, the moving plate 630 is slidably moved in the first and the second direction with respect to the base 610, and thus the moving plate 630 may be slidably moved in various directions. Accordingly, the first and the second body 200, 300 fixed to them, respectively, may be relatively slidably moved in various ways. This embodiment has an advantage that tilting movement is possible, in addition to degrees of movement described relative to the previously embodiments.

An elastic member 650 is provided between the moving plate 630 and the cover 640 to restore the moving plate 630 to an initial position at the time of moving the moving plate 630. The elastic member 650 with a circular ring shape may be supported between a circumferential surface of the moving plate 630 and an inner wall of the cover 640. The elastic member 650 is formed of an elastically transformed material (such as rubber, spring, etc.) and elastically transformed at the time of moving the moving plate 630 to restore the moving plate 630 to an initial position.

The connection module 600 may include a sensing unit for sensing relative movement between the moving plate 630 and the base 610. The sensing unit, according to this embodiment, may include a magnet 671 mounted on a rear surface of the moving plate 630 and a magnetic sensor 672 for detecting the movement of the magnet 671.

The magnet 671 may include an insertion groove 674 for inserting the insertion protrusion 632, and the magnet 671 is fixed to the moving plate 630 as the 632 is inserted in an insertion groove 674. Accordingly, the magnet 671 is moved together with the moving plate 630.

The magnetic sensor 672 may be mounted on a substrate 673 disposed at a rear surface of the base 610. The substrate 673 may be combined with the base 610, and the magnetic sensor 672 may be in plural number at a plurality of positions on the substrate. The position of the magnet 671 may be detected by a relative intensity of the magnetic fields detected by the magnetic sensors 672, respectively.

Different types of sensing units may be used in other embodiments, and also the first and the second conductive plates 451, 452 and the switch 450' may be differently formed.

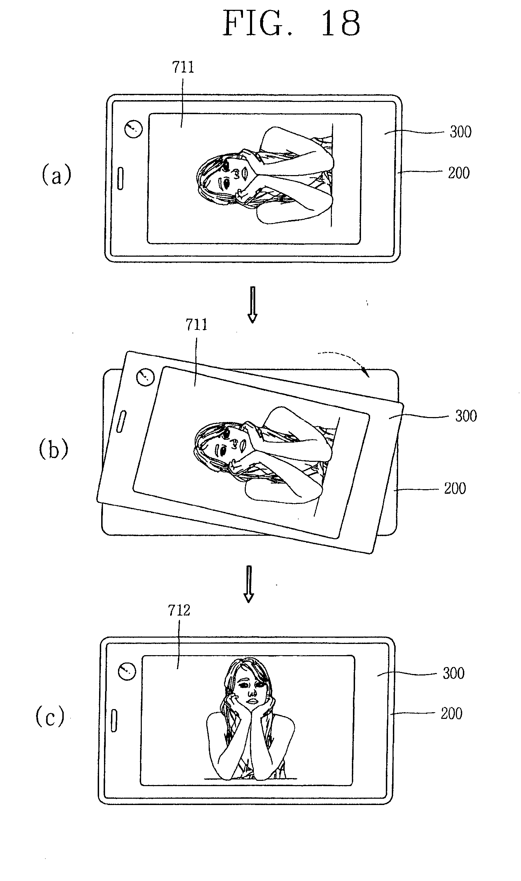

FIG. 18 shows an operating state of a mobile terminal according to another embodiment, in which the second body 300 is tiltably (rotatably) moved with respect to the first body 200 using a connection unit 600 as described above. The tilting movement may refer to case where the second body 300 rotates with respect to the first body 200 at a predetermined tilt angle.

A mobile terminal may be configured to perform a specific operation mode or function based on the tilting movement of the second body 300. In this embodiment, the output direction of the display screen is changed as an example of a function that may be performed in response to the tilt movement.

For example, FIG. 18a shows a specific image 711 displayed on the display unit 151 in a vertical direction of the second body 300. As shown in FIG. 18b, if the second body 300 is tiltably moved, the output direction of the display screen is changed as shown in FIG. 18c. Accordingly, an image 712 with a changed direction will be displayed on the display unit 151.

In this manner, it may be possible to input different commands based on various tilt and other movements of the second body 300 without requiring the use of an additional manipulation unit.

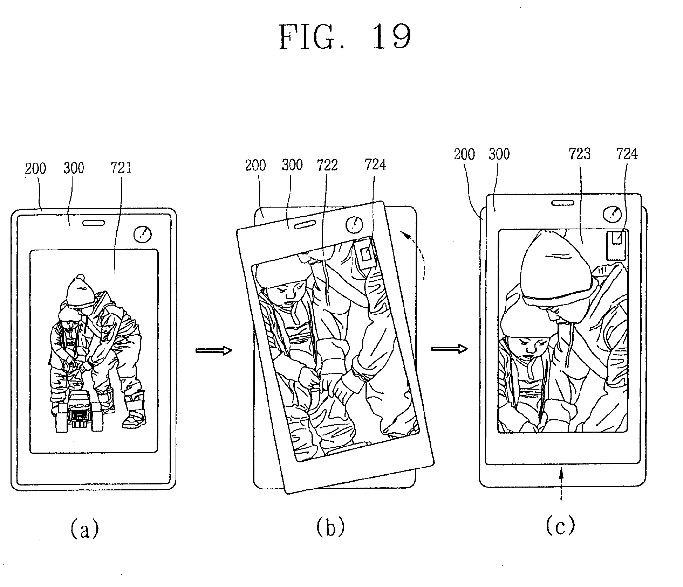

FIG. 19 shows an operating state of a mobile terminal according to another embodiment, in which a tilting movement and linear movement of the second body 300 are mixed with each other to perform a corresponding function. In this embodiment, a specific image 721 is displayed on the display unit 151 and a "zoom-in" or "zoom-out" operation is carried out when the second body 300 is tiltably moved, and the display screen is moved when the second body 300 is linearly moved.

FIG. 19a shows a view in which any one of the files stored with the pictures taken through a camera 121 is displayed in the form of a photograph. As shown in FIG. 19b, if the second body 300 is tiltably moved in a predetermined direction, then a zoom-in operation will be carried out, thereby displaying an enlarged image 722 of the currently displayed image 721. In this case, if the second body 300 is tiltably moved in the opposite direction, a zoom-out operation will be carried out.

In case where the enlarged image 722 is displayed, only part of the entire image may be displayed on the display unit 151. A graphic indicating the position of a currently-displayed part of the entire screen may be displayed on the display unit 151 as a guide to a user to show him which part of the image is enlarged.

As shown in FIG. 19c, if the second body 300 is moved in an upper linear direction, then a displayed part of the entire screen is moved in the upper direction, thereby displaying an upper part of the screen 723. In other words, it may be possible to display a non-displayed part of the entire screen through movement of the second body 300 on the display unit 151.

In the drawing, a view is shown in which the second body 300 is moved in an upper direction. In other embodiments, it may be possible to control a displayed part of the entire screen through the movement of the second body 300 in a vertical or horizontal direction.

As described above, various embodiments have been shown in which an object displayed on the display unit 151 is moved, or a specific operation mode or function is carried out based on the movement of the second body 300.

According to a mobile terminal having the foregoing construction associated with at least one embodiment, there is provided a user interface and a mechanical mechanism in which an object displayed on the display unit is moved in a moving direction of the second body, thereby providing an input method for allowing the user to input more intuitively.

Moreover, it may be possible to input information through the movement of the second body, and thus it is not required to dispose an additional manipulation unit at the terminal, thereby securing a space for mounting other components or reducing the size of the terminal.

One or more embodiments described herein provide a mobile terminal that includes a new type of user interface and mechanical mechanism for inputting commands or otherwise performing control functions based on relative movement of different bodies or parts of the terminal.

In order to accomplish these and/or other objectives, a mobile terminal according to one embodiment may include a first body; a second body disposed on one surface of the first body, having a display unit for displaying an object that can be moved in a plurality of directions; a connection module configured to connect the first body with the second body such that the second body can be relatively slidably moved in a plurality of directions with respect to the first body; and a controller configured to move the object displayed on the display unit in a direction corresponding to the moving direction of the second body according to the movement of the second body.

The display unit may display a plurality of icons or items, and the object may include a pointer or cursor positioned on the icons or items. The object may include a graphic that can be moved in a plurality of direction, displayed on the display unit, when implementing a specific mode.

The mobile terminal may be preset to perform a specific operation according to the movement of the second body in a specific direction, and the controller may perform the preset operation according to the movement of the second body.

The connection module may include a first slide rail fixed to the first body, an intermediate plate inserted in and slidably connected to the first slide rail in a first direction, and a second slide rail into which the intermediate plate is inserted to be slidably connected to the intermediate plate in a second direction and fixed to the second body.

The connection module may include a base fixed to a front surface of the first body; a slide member slidably mounted on a front surface of the base in the first direction, a moving plate slidably mounted on the slide member in the second direction, having a fixation portion fixed to a rear surface of the second body; and a cover combined with the base to cover the moving plate, having a through hole to expose the fixation portion.

According to another embodiment, a mobile terminal includes a first body; a second body disposed on one surface of the first body; a connection module configured to connect the first body with the second body such that the second body can be relatively slidably moved in a plurality of directions with respect to the first body, and restore the second body to an initial position when the second body is relatively moved; and a controller configured to implement different preset operations according to the moving direction of the second body when moving the second body.

According to another embodiment, a mobile terminal comprises a first body; a second body adjacent the first body; a connector to moveably connect the first body to the second body; and a controller to change information displayed on a screen based on movement of the second body relative to the first body, wherein the connector allows the second body to move along a first axis relative to the first body and along a second axis that crosses the first axis relative to the first body.

The first axis may be substantially perpendicular to the second axis, or the first axis and the second axis are separated by an acute angle. Additionally, the second body may move to a diagonal position relative to the first body as a result of the second body moving along both the first and second axes, or the second body may move along a curvilinear path as a result of the second body moving along both the first and second axes.

In one embodiment, the controller changes a location of an object on the display screen based on movement of the second body relative to the first body. The controller may perform a first operation when the second body moves along the first axis relative to the first body, and performs a second operation when the second body moves along the second axis relative to the first body. Also, or alternatively, a position of a cursor on the screen may change relative to one or more displayed objects based on movement of the second body.

According to one embodiment the connector may include at least a first slide rail coupled to the first body; an intermediate plate coupled to the first slide rail for movement along the first axis; and at least a second slide rail coupled to the intermediate plate for movement along the second axis. The second slide rail is attached to the second body. A pair of first slide rails are coupled to the first body and a pair of second slide rails are coupled to the intermediate plate, the pair of second slide rails attached to the second body.

In addition, at least one spring to restore the second body to an initial position after the second body moves relative to the first body, and a sensor may be used to detect movement of the second body relative to the first body.

Also, the connector may include a base fixed to a front surface of the first body; a slide member slidably mounted on a front surface of the base in a direction substantially parallel to one of the first or second axes; and a moving plate slidably mounted on the slide member in a direction substantially parallel to the other of the first or second axes, the moving plate coupled to a rear surface of the second body.

Also, an elastic member may be provided, between a circumferential surface of the moving plate and the cover, to impart a restoring force to the moving plate when the moving plate is moved from an initial position.

According to another embodiment, a mobile terminal, comprises a first body; a second body adjacent the first body; a connector to moveably connect the first body to the second body; and a controller to perform different functions based on movement of the second body relative to the first body, wherein: the second body moveable along a first axis relative to the first body and along a second axis that crosses the first axis relative to the first body, a first function is performed in response to movement of the second body along the first axis, and a second function is performed in response to movement of the second body along the second axis. A third function is performed in response to movement of the second body along both the first and second axes, the first axis is substantially perpendicular to the second axis, or the first axis may cross the second axis.

According to another embodiment, a mobile terminal comprises a first body; a second body adjacent the first body; a connector to rotatably connect the first body to the second body; and a controller to perform different functions based on movement of the second body relative to the first body, wherein: the second body is rotatable in first and second directions relative to the first body, a first function is performed in response to rotation of the second body in the first direction, and a second function is performed in response to rotation of the second body in the second direction. The first and second directions may be opposing directions, with the first direction being one of a counterclockwise direction or a clockwise direction and the second direction being the other of the counterclockwise direction and the clockwise direction.

Herein, the suffix "module" or "unit" used for constituent elements is merely intended for easy description of the specification, and the suffix itself does not give any special meaning or function such as means-plus-function treatment.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. The features of any one embodiment may be combined with the features of any other embodiment.

Although embodiments have been described with reference to a number of illustrative embodiments thereof, it should be understood that numerous other modifications and embodiments can be devised by those skilled in the art that will fall within the scope of the principles of this invention. More particularly, various variations and modifications are possible in the component parts and/or arrangements of the subject combination arrangement within the scope of the invention, the drawings and the appended claims. In addition to variations and modifications in the component parts and/or arrangements, alternative uses will also be apparent to those skilled in the art.

## Claims

1. A mobile terminal, comprising:
a first body (200);
a second body (300) adjacent the first body(200);
a connector adapted to moveably connect the first body to the second body; and
a controller (180) adapted to change information displayed on a screen based on movement of the second body (300) relative to the first body (200), wherein the connector is adapted to allow the second body to move along a first axis relative to the first body and along a second axis that crosses the first axis relative to the first body,
**characterized in that** the connector includes:
a base (610) fixed to a front surface of the first body;
a slide member (620) slidably mounted on a front surface of the base in a direction substantially parallel to one of the first or second axes;
a moving plate (630) having a circular plate shape slidably mounted on the slide member in a direction substantially parallel to the other of the first or second axes, the moving plate coupled to a rear surface of the second body.
a cover (640) combined with the base (610) to cover the moving plate (630); and
an elastic member (650) having a circular ring shape, between a circumferential surface of the moving plate (630) and the cover (640), adapted to impart a restoring force to the moving plate when the moving plate is moved from an initial position.

2. The mobile terminal of claim 1, wherein the first axis is substantially perpendicular to the second axis.

3. The mobile terminal of claim 1, wherein the first axis and the second axis are separated by an acute angle.

4. The mobile terminal of any one of claims 1 to 3, wherein the second body (300) is adapted to move to a diagonal position relative to the first body (200) as a result of the second body moving along both the first and second axes.

5. The mobile terminal of any one of claims 1 to 3, wherein the second body (300) is adapted to move along a curvilinear path as a result of the second body moving along both the first and second axes.

6. The mobile terminal of any one of claims 1 to 5, wherein the controller (180) is adapted to change a location of an object on the display screen based on movement of the second body (300) relative to the first body.

7. The mobile terminal of any one of claims 1 to 5, wherein the controller (180) is adapted to perform a first operation when the second body moves along the first axis relative to the first body, and to perform a second operation when the second body moves along the second axis relative to the first body.

8. The mobile terminal of any one of claims 1 to 5, wherein a position of a cursor (520, 550) on the screen changes relative to one or more displayed objects based on movement of the second body.

9. The mobile terminal of claim any one of claims 1 to 8, further comprising a sensor adapted to detect movement of the second body relative to the first body.

## Patentansprüche

1. Mobiles Endgerät, das aufweist:
einen ersten Körper (200);
einen zweiten Körper (300) benachbart zu dem ersten Körper (200);
einen Verbinder, der geeignet ist, den ersten Körper beweglich mit dem zweiten Körper zu verbinden; und
eine Steuerung (180), die geeignet ist, die Informationen, die auf einem Bildschirm angezeigt werden, basierend auf der Bewegung des zweiten Körpers (300) relativ zu dem ersten Körper (200) zu ändern, wobei der Verbinder geeignet ist, zuzulassen, dass der zweite Körper sich entlang einer ersten Achse relativ zu dem ersten Körper und entlang einer zweiten Achse, die die erste Achse kreuzt, relativ zu dem ersten Körper zu bewegen,
**dadurch gekennzeichnet, dass** der Verbinder umfasst:
eine Basis (610), die an einer vorderen Oberfläche des ersten Körpers fixiert ist;
ein Schieberelement (620), das verschiebbar in einer Richtung, die im Wesentlichen parallel zu einer der ersten oder zweiten Achsen ist, auf einer vorderen Oberfläche der Basis montiert ist;
eine bewegliche Platte (630) mit einer kreisförmigen Plattenform, die in eine Richtung im Wesentlichen parallel zu der anderen der ersten oder zweiten Achsen verschiebbar auf dem Schieberelement montiert ist, wobei die bewegliche Platte mit einer hinteren Oberfläche des zweiten Körpers gekoppelt ist,
eine Abdeckung (40), die mit der Basis (610) kombiniert ist, um die bewegliche Platte (630) zu bedecken; und
ein elastisches Element (650) mit einer kreisförmigen Ringform zwischen einer Umfangsoberfläche der beweglichen Platte (630) und der Abdeckung (640), das geeignet ist, der beweglichen Platte eine Rückstellkraft zu verleihen, wenn die bewegliche Platte aus einer ursprünglichen Position bewegt wird.

2. Mobiles Endgerät nach Anspruch 1, wobei die erste Achse im Wesentlichen senkrecht zu der zweiten Achse ist.

3. Mobiles Endgerät nach Anspruch 1, wobei die erste Achse und die zweite Achse durch einen spitzen Winkel getrennt sind.

4. Mobiles Endgerät nach einem der Ansprüche 1 bis 3, wobei der zweite Körper (300) geeignet ist, sich als ein Ergebnis dessen, dass der zweite Körper sich sowohl entlang der ersten als auch der zweiten Achse bewegt, in eine diagonale Position relativ zu dem ersten Körper (200) zu bewegen.

5. Mobiles Endgerät nach einem der Ansprüche 1 bis 3, wobei der zweite Körper (300) geeignet ist, sich als ein Ergebnis dessen, dass der zweite Körper sich sowohl entlang der ersten als auch der zweiten Achse bewegt, entlang eines gekrümmten Wegs zu bewegen.

6. Mobiles Endgerät nach einem der Ansprüche 1 bis 5, wobei die Steuerung (180) geeignet ist, einen Ort eines Objekts auf dem Anzeigebildschirm basierend auf der Bewegung des zweiten Körpers (300) relativ zu dem ersten Körper zu ändern.

7. Mobiles Endgerät nach einem der Ansprüche 1 bis 5, wobei die Steuerung (180) geeignet ist, einen ersten Betrieb durchzuführen, wenn der zweite Körper sich relativ zu dem ersten Körper entlang der ersten Achse bewegt, und einen zweiten Betrieb durchzuführen, wenn der zweite Körper sich relativ zu dem ersten Körper entlang der zweiten Achse bewegt.

8. Mobiles Endgerät nach einem der Ansprüche 1 bis 5, wobei sich eine Position eines Cursors (520, 550) auf dem Bildschirm relativ zu einem oder mehreren angezeigten Objekten basierend auf der Bewegung des zweiten Körpers ändert.

9. Mobiles Endgerät nach einem der Ansprüche 1 bis 8, das ferner einen Sensor aufweist, der geeignet ist, um die Bewegung des zweiten Körpers relativ zu dem ersten Körper zu erfassen.

## Revendications

1. Terminal mobile, comprenant :
un premier corps (200) ;
un second corps (300) adjacent au premier corps (200) ;
un connecteur adapté pour connecter de façon mobile le premier corps au second corps ; et
un dispositif de commande (180) adapté pour changer des informations affichées sur un écran en fonction du mouvement du second corps (300) par rapport au premier corps (200), dans lequel le connecteur est adapté pour permettre au second corps de se déplacer le long d'un premier axe par rapport au premier corps et le long d'un second axe qui croise le premier axe par rapport au premier corps,
**caractérisé en ce que** le connecteur comprend :
une base (610) fixée à une surface avant du premier corps ;
un élément coulissant (620) monté de façon coulissante sur une surface avant de la base dans une direction sensiblement parallèle à un du premier axe ou du second axe ;
une plaque mobile (630) présentant une forme de plaque circulaire montée de façon coulissante sur l'élément coulissant dans une direction sensiblement parallèle à l'autre du premier axe ou du second axe, la plaque mobile étant accouplée à une surface arrière du second corps ;
un couvercle (640) associé à la base (610) pour couvrir la plaque mobile (630) ; et
un élément élastique (650) présentant une forme annulaire circulaire, entre une surface circonférentielle de la plaque mobile (630) et le couvercle (640), adapté pour transmettre une force de rappel à la plaque mobile lorsque la plaque mobile est déplacée à partir d'une position initiale.

2. Terminal mobile selon la revendication 1, dans lequel le premier axe est sensiblement perpendiculaire au second axe.

3. Terminal mobile selon la revendication 1, dans lequel le premier axe et le second axe sont séparés par un angle aigu.

4. Terminal mobile selon une quelconque des revendications 1 à 3, dans lequel le second corps (300) est adapté pour se déplacer jusqu'à une position diagonale par rapport au premier corps (200) en conséquence du déplacement du second corps le long à la fois du premier et du second axes.

5. Terminal mobile selon une quelconque des revendications 1 à 3, dans lequel le second corps (300) est adapté pour se déplacer le long d'un trajet curviligne en conséquence du déplacement du second corps le long à la fois du premier et du second axes.

6. Terminal mobile selon une quelconque des revendications 1 à 5, dans lequel le dispositif de commande (180) est adapté pour changer un emplacement d'un objet sur l'écran d'affichage en fonction du mouvement du second corps (300) par rapport au premier corps.

7. Terminal mobile selon une quelconque des revendications 1 à 5, dans lequel le dispositif de commande (180) est adapté pour réaliser une première opération lorsque le second corps se déplace le long du premier axe par rapport au premier corps, et pour réaliser une seconde opération lorsque le second corps se déplace le long du second axe par rapport au premier corps.

8. Terminal mobile selon une quelconque des revendications 1 à 5, dans lequel une position d'un curseur (520, 550) sur l'écran change par rapport à un ou plusieurs objets affichés en fonction du mouvement du second corps.

9. Terminal mobile selon une quelconque des revendications 1 à 8, comprenant en outre un capteur adapté pour détecter le mouvement du second corps par rapport au premier corps.
